# NEUE EUROPÄISCHE PATENTSCHRIFT

(11) **EP 2 315 966 B2**
(45) Veröffentlichungstag und Bekanntmachung des Hinweises auf die Entscheidung über den Einspruch: **16.03.2016**
(45) Hinweis auf die Patenterteilung: 02.11.2011
(21) Anmeldenummer: 09777593.6
(22) Anmeldetag: 31.07.2009
(51) Int. Cl.: F16D 65/56, F16D 65/16

(54) **SCHEIBENBREMSE**
DISK BRAKE
FREIN À DISQUE

(30) Priorität: 14.08.2008 DE 102008037775; 14.08.2008 DE 102008037774
(43) Veröffentlichungstag der Anmeldung: 04.05.2011
(60) Teilanmeldung: 10016215.5
(73) Patentinhaber: Wabco Radbremsen GmbH, 68229 Mannheim (DE)
(72) Erfinder: JUNGMANN, Hans-Christian, 69517 Gorxheimertal (DE); KELLER, Marcus, 69469 Weinheim (DE)
(74) Vertreter: Leinweber & Zimmermann
(86) Internationale Anmeldenummer: PCT/EP2009/005581
(87) Internationale Veröffentlichungsnummer: WO 2010/017901

(56) Entgegenhaltungen:
- EP-A- 0 730 107
- EP-A- 1 683 986
- WO-A-2004/059187
- DE-A1- 4 307 018
- DE-A1-102006 020 550
- US-A- 3 967 705

## Beschreibung

Die Erfindung betrifft zum einen eine Scheibenbremse, insbesondere für Nutzfahrzeuge, mit einer Zuspannwelle und einer Nachstelleinrichtung zum verschleißabhängigen Nachstellen, wobei eine Drehachse der Zuspannwelle senkrecht auf einer Drehachse der Nachstelleinrichtung steht und ein Stift zur Kopplung der Zuspannwelle mit der Nachstelleinrichtung dient.

Scheibenbremsen der oben genannten Art sind bekannt, beispielsweise aus der EP 0 730 107 B1. Vergleichbare Lösungen zeigen die EP 0 739 459 B1 und die EP 1 683 986 B1.

Bei der Lösung nach der EP 0 730 107 B1 liegt die Längsachse des Stiftes parallel zu der Drehachse der Zuspannwelle. Der Versatz der Längsachse des Stiftes bezüglich der Drehachse der Zuspannwelle bestimmt das Übersetzungsverhältnis der Kopplung der Zuspannwelle mit der Nachstelleinrichtung. Je größer der Versatz der Längsachse des Stiftes bezüglich der Drehachse der Zuspannwelle ist, um so größer ist der Betrag der Nachstellung pro Betätigung der Zuspannwelle.

Die Nachstelleinrichtung dient zum selbsttätigen Ein- bzw. Nachstellen des Lüftspiels. Dabei ist entscheidend, wie viele Bremsbetätigungen notwendig sind, um ein vorgegebenes Soll-Lüftspiel einzustellen, beispielsweise wenn das Ist-Lüftspiel durch übermäßigen Bremsbelag- und/oder Bremsscheibenverschleiß groß ist. Darüber hinaus soll das Lüftspiel nach Servicearbeiten an der Bremse, beispielsweise nach Belagwechsel schnell, d.h. mit möglichst wenigen Bremsbetätigungen wiederhergestellt werden. Jedes vom Soll-Lüftspiel zu stark abweichende Ist-Lüftspiel wirkt sich nachteilig auf das Bremsmoment im Anlege-/Krafthub aus, weil das System einen übermäßigen Leerhub überwinden muß. Dabei wird der maximale Betätigungshub (Leerhub + Anlege-/Krafthub) beispielsweise durch die Innenkontur des Bremssattels festgelegt bzw. begrenzt.

Die obigen Ausführungen treffen auf alle drei oben genannten Bremsen zum Stand der Technik zu, d.h. unabhängig davon, ob die Nachstellvorrichtung koaxial zu einer Druckspindel oder seitlich versetzt dazu liegt.

Die DE 42 04 307 A1 zeigt den Drehantrieb für eine Spindel einer Scheibenbremse für Fahrzeuge. Dabei dienen zwei Stifte zur Kopplung einer Zuspannwelle mit einer Nachstelleinrichtung. Die beiden Stifte sind radial auskragend ausgeführt. Sie sind in einer Radialebene um einen geringen Winkelbetrag zueinander versetzt angeordnet. Ihre Enden greifen in zwei in Querrichtung zueinander versetzt an einem Antreibhebel angeordnete Ausnehmungen ein.

Der Erfindung liegt die Aufgabe zugrunde, die Scheibenbremse nach der EP 0 730 107 B1 derart weiterzubilden, daß die Nachstellgeschwindigkeit erhöht bzw. die Anzahl der für ein vorgegebenes Nachstellmaß erforderlichen Bremsbetätigungen verringert wird.

Erfindungsgemäß wird die gestellte Aufgabe dadurch gelöst, daß eine Längsachse des Stiftes mit der Drehachse der Zuspannwelle einen spitzen Winkel einschließt.

Durch diese Anstellung des Stiftes bezüglich der Drehachse der Zuspannwelle wird erreicht, daß das freie Ende des Stiftes, das das Übersetzungsverhältnis bestimmt, einen besonders großen Abstand von der Drehachse der Zuspannwelle haben kann. Während sich bei herkömmlichen Bremsen der Stift beim Zuspannen auf einer Bahn bewegt, die einem Kreiszylindermantel entspricht, bewegt sich der Stift nach der Erfindung auf einer Bahn, die einem Kegelmantel entspricht.

Dadurch ist das Maß der Nachstellung pro Betätigung der Bremse größer und es bedarf einer geringeren Anzahl an Bremsbetätigungen, um ein vorgegebenes Nachstellmaß zu realisieren. Mit anderen Worten steigt die Nachstellgeschwindigkeit.

Die Erfindung ermöglicht mithin, ohne Veränderungen der Strukturen der bekannten Bremse und insbesondere unter Erhalt der Kompaktheit mit einfachen Mitteln die Nachstellgeschwindigkeit zu erhöhen.

Der Winkel kann erfindungsgemäß 5° bis 45° betragen, bevorzugt 10° bis 30°, weiter bevorzugt 15° bis 23°.

Weiter bevorzugt ist der Stift an der Zuspannwelle angebracht.

Nach einer besonders bevorzugten Ausführungsform der Erfindung ist vorgesehen, daß der Stift in Radialrichtung über den Außenumfang der Zuspannwelle hinausragt.

Dadurch kann nämlich der das Übersetzungsverhältnis bestimmende Abstand des freien Endes des Stiftes von der Drehachse der Zuspannwelle noch größer als der Radius der Zuspannwelle selbst sein, wodurch besonders große Nachstellschritte pro Bremsbetätigung erreicht werden. Bei den oben genannten herkömmlichen Bremsen ist ein Überstand über den Außenumfang nicht möglich, weil dort der Stift parallel zur Drehachse der Zuspannwelle liegt.

Nach einer weiter bevorzugten Ausführungsform der Erfindung ragt der Stift in eine Ausnehmung an der Nachstelleinrichtung hinein. Dadurch ist eine besonders einfache Kopplung realisiert.

Die Abmessungen der Ausnehmung einerseits und die Abmessungen des Stiftes andererseits bestimmen erfindungsgemäß bevorzugt ein Lüftspiel der Bremse.

Mit anderen Worten wird die Ausnehmung breiter als die Dicke des Stiftes sein, so daß der Stift mit Spiel in die Ausnehmung eingreift. Dieses Spiel bestimmt das Lüftspiel.

Erfindungsgemäß bevorzugt hat die Ausnehmung die Form einer Axialnut. Wiederum ist diese Ausgestaltung wegen der Einfachheit der Realisierung bevorzugt.

Ferner kann vorgesehen sein, daß eine Begrenzungsfläche der Ausnehmung, an der der Stift zur Kopplung der Nachstelleinrichtung mit der Zuspannwelle anliegt, eben, sphärisch oder ballig ist.

Die konkrete Ausgestaltung der Begrenzungsfläche hängt von den jeweiligen Gegebenheiten ab. Sie wird so gewählt werden, daß Reibungsverluste minimiert sind und/oder ein Verklemmen zuverlässig ausgeschlossen ist. Insbesondere im Falle einer ebenen Begrenzungsfläche wird deren Ausrichtung bezüglich der Drehachse der Nachstelleinrichtung (Anstellwinkel) derart gewählt sein, daß ein Verklemmen zuverlässig vermieden ist.

Im folgenden ist die Erfindung anhand eines bevorzugten Ausführungsbeispiels unter Bezugnahme auf die beiliegende Zeichnung mit weiteren Einzelheiten näher erläutert. Dabei zeigen
- Figur 1: eine Teilschnittansicht eines Ausführungsbeispiels der Scheibenbremse nach der Erfindung,
- Figur 2: eine perspektivische Ansicht von einigen Einzelteilen der Bremse,
- Figur 3: die gleichen Teile wie Figur 2, jedoch in der Draufsicht, und
- Figur 4: eine weitere Teilschnittansicht der Bremse, jedoch bezüglich der Ansicht nach Figur 1 um 90° gedreht.

In der Zeichnung ist eine Scheibenbremse dargestellt. Sie weist einen Bremssattel 10 auf. Ferner weist sie eine Zuspanneinrichtung auf, zu der ein Drehhebel 12 mit einer Zuspannwelle 14 gehört. Wird der Drehhebel in Richtung "D" verschwenkt, so übt er Druck auf ein Druckstück 16 aus, das eine Traverse der Bremse bildet. Das Druckstück 16 seinerseits drückt auf eine Druckhülse 18, die die Zuspannkraft dann über eine Druckschraube 20 auf einen Bremsbelag 22 überträgt. Daher wird bei Betätigen des Drehhebels 12 der Bremsbelag 22 gegen eine in der Zeichnung nicht dargestellte Bremsscheibe gedrückt.

Durch einen Stift 23 ist eine Antriebshülse 24 mit der Zuspannwelle 14 derart gekoppelt, daß ein Verschwenken des Drehhebels 12 nach Überwindung eines Lüftspiels zu einem Verdrehen der Antriebshülse führt. Die Antriebshülse 24 ist über eine als Einwegkupplung dienende Schlingfeder 26 mit einer Abtriebshülse 28 gekoppelt. Dadurch dreht sich beim Zuspannen nach Überwindung des Lüftspiels auch die Abtriebshülse 28. Die Abtriebshülse 28 bildet zusammen mit einer Stützscheibe 30 eine Rutschkupplung. Zur Vorspannung dienen drei Tellerfedern 33, die sich an einem Sicherungsring 34 abstützen.

Die Stützscheibe 30 hat eine von der Kreisform abweichende Innenkontur, wobei die Außenkontur der Druckhülse 18 dort, wo die Stützscheibe 30 sitzt, eine komplementäre Außenkontur hat, so daß die Stützscheibe 30 mit der Druckhülse 18 in beiden Drehrichtungen drehgekoppelt ist.

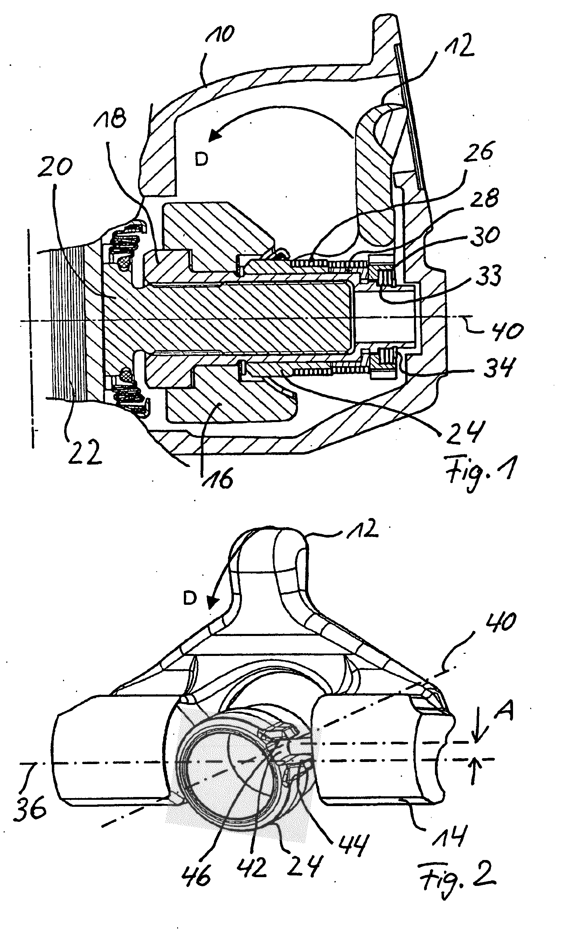

Wegen der oben im einzelnen beschriebenen Kopplungen der einzelnen Bauteile miteinander bewirkt ein Verschwenken des Drehhebels 12 in Richtung "D" nach Überwinden des Lüftspiels ein Verdrehen der Druckhülse 18, die mit der Druckschraube 20 verschraubt ist, so daß sich die Druckschraube 20 in Figur 1 nach links aus der Druckhülse 18 herausschraubt.

Dieses Herausschrauben erfolgt aber nur, bis der Bremsbelag 22 an der Bremsscheibe anliegt. Wird dann nämlich weiter zugespannt, steigt die Reibung zwischen dem Druckstück 16 und der Druckhülse 18, so daß sich die Druckhülse 18 nicht mehr weiter verdrehen kann. In ähnlicher Weise wirkt das mit zunehmendem Druck auftretende Reibmoment innerhalb der Schraubverbindung zwischen der Druckhülse 18 und der Druckschraube 20. Die Rutschkupplung 28, 30 rutscht durch.

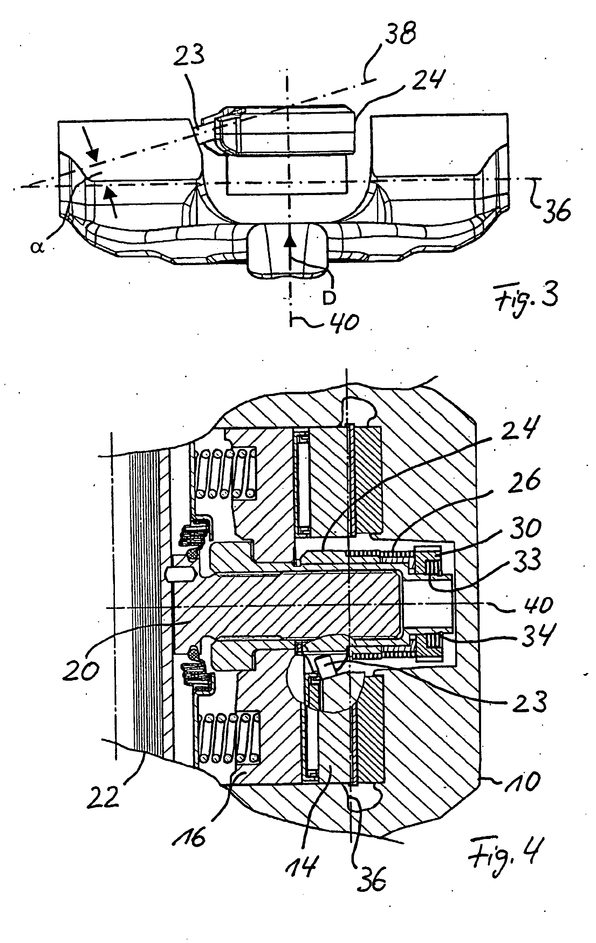

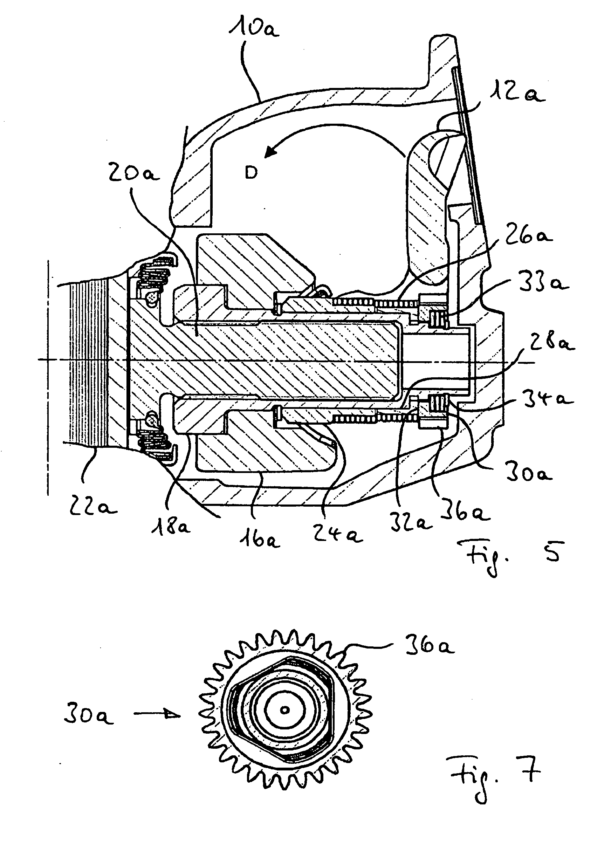

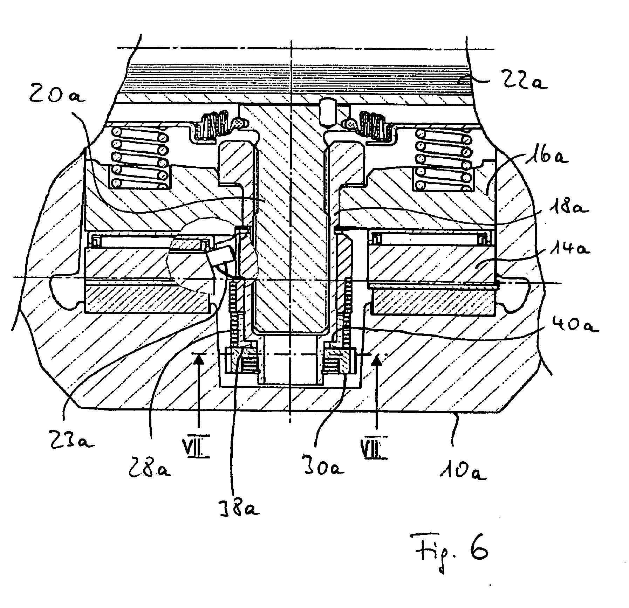

Wie insbesondere Figur 3 zu entnehmen ist, ist der Stift 23 bezüglich der Drehachse 36 der Zuspannwelle 14 angestellt. Seine Längsachse 38 schließt mit der Drehachse 36 einen Winkel α = 18° in dem gezeigten Ausführungsbeispiel ein. Mithin bewegt er sich bei Betätigung auf einem gedachten Kegelmantel. Wie darüber hinaus Figur 4 zu entnehmen ist, ragt das freie Ende des Stiftes 23 radial über den Außenumfang der Zuspannwelle 14 hinaus. Der Abstand A gemäß Figur 2 des freien Endes des Stiftes 23 von der Drehachse 36 der Zuspannwelle 14 ist mithin größer als der Radius der Bremswelle. Dadurch kann ein besonders großes Übersetzungsverhältnis bei der Kopplung der Zuspannwelle 14 mit der Nachstelleinrichtung, insbesondere der Antriebshülse 24 erreicht werden.

Die Drehachse der Nachstelleinrichtung insgesamt und der Antriebshülse 24 insbesondere ist mit der Bezugszahl 40 bezeichnet. Sie steht senkrecht auf der Drehachse 36 der Zuspannwelle 14. Die Drehachse 36 selbst liegt dabei parallel zur Bremsscheibenebene.

An der Antriebshülse 24 ist eine Axialnut ausgebildet, die mit der Bezugszahl 42 bezeichnet ist. In diese eine Ausnehmung bildende Axialnut 42 greift der Stift 23 zur Drehkopplung ein.

Die beiden Seitenwände 44 und 46 der Axialnut 42 sind bei dem dargestellten Ausführungsbeispiel eben. Sie können aber auch sphärisch oder ballig sein. Sie werden jeweils deran ausgestaltet, daß unter Berücksichtigung der übrigen Verhältnisse ein optimaler Anlageverlauf erreicht wird.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein. So ist die Erfindung anwendbar auf Bremsen mit einer, zwei oder mehr Druckschraube(n)/-spindel(n) mit und ohne Druckstück. Das erfindungsgemäße Prinzip gilt auch für Nachstellvorrichtungen, die koaxial oder seitlich versetzt zu einer oder mehreren Druckspindel(n) liegen.

## Patentansprüche

1. Scheibenbremse, insbesondere für Nutzfahrzeuge, mit einer Zuspannwelle (14) und einer Nachstelleinrichtung zum verschleißabhängigen Nachstellen, wobei eine Drehachse (36) der Zuspannwelle senkrecht auf einer Drehachse (40) der Nachstelleinrichtung steht und ein Stift (23) zur Kopplung der Zuspannwelle mit der Nachstelleinrichtung dient,
**dadurch gekennzeichnet, daß**
eine Längsachse (38) des Stiftes mit der Drehachse der Zuspannwelle einen spitzen Winkel (α) von 5° bis 45° einschließt und
der Stift (23) sich beim Zuspannen auf einer Bahn bewegt, die einem Kegelmantel entspricht.

2. Scheibenbremse nach Anspruch 1, **dadurch gekennzeichnet, daß** der Winkel (α)10° bis 30°, bevorzugt 15° bis 23° beträgt.

3. Scheibenbremse nach Anspruch 1 oder 2, **dadurch gekennzeichnet, daß** der Stift (23) an der Zuspannwelle (14) angebracht ist.

4. Scheibenbremse nach Anspruch 3, **dadurch gekennzeichnet, daß** der Stift (23) in Radialrichtung über den Außenumfang der Zuspannwelle (14) hinausragt.

5. Scheibenbremse nach einem der vorangehenden Ansprüche, **dadurch gekennzeichnet, daß** der Stift (23) in eine Ausnehmung (42) an der Nachstelleinrichtung hineinragt.

6. Scheibenbremse nach Anspruch 5, **dadurch gekennzeichnet, daß** die Abmessungen der Ausnehmung (42) einerseits und die Abmessungen des Stiftes (23) andererseits ein Lüftspiel der Bremse bestimmen.

7. Scheibenbremse nach Anspruch 5 oder 6, **dadurch gekennzeichnet, daß** die Ausnehmung (42) die Form einer Axialnut hat.

8. Scheibenbremse nach einem der Ansprüche 5 bis 7, **dadurch gekennzeichnet, daß** eine Begrenzungsfläche (44, 46) der Ausnehmung (42), an der der Stift (23) zur Kopplung der Nachstelleinrichtung mit der Zuspannwelle (14) anliegt, eben, sphärisch oder ballig ist.

## Claims

1. Disc brake, in particular for commercial vehicles, having a brake application shaft (14) and an adjusting device for wear-dependent adjustment, a rotational axis (36) of the brake application shaft lying perpendicularly on a rotational axis (40) of the adjusting device, and a pin (23) serving to couple the brake application shaft to the adjusting device, **characterized in that** a longitudinal axis (38) of the pin encloses an acute angle (α) of from 5° to 45° with the rotational axis of the brake application shaft, and the pin (23) moves during the brake application on a path which corresponds to a surface of a cone.

2. Disc brake according to Claim 1, **characterized in that** the angle (α) is from 10° to 30°, preferably from 15° to 23°.

3. Disc brake according to Claim 1 or 2, **characterized in that** the pin (23) is attached on the brake application shaft (14).

4. Disc brake according to Claim 3, **characterized in that** the pin (23) protrudes beyond the outer circumference of the brake application shaft (14) in the radial direction.

5. Disc brake according to one of the preceding claims, **characterized in that** the pin (23) protrudes into a recess (42) on the adjusting device.

6. Disc brake according to Claim 5, **characterized in that** the dimensions of the recess (42) on one side and the dimensions of the pin (23) on the other side define an air play of the brake.

7. Disc brake according to Claim 5 or 6, **characterized in that** the recess (42) has the shape of an axial groove.

8. Disc brake according to one of Claims 5 to 7, **characterized in that** a bounding face (44, 46) of the recess (42), against which the pin (23) for coupling the adjusting device to the brake application shaft (14) bears, is flat, spherical or crowned.

## Revendications

1. Frein à disque, en particulier pour véhicules utilitaires, comprenant un arbre de serrage (14) et un dispositif de rattrapage pour le rattrapage en fonction de l'usure, un axe de rotation (36) de l'arbre de serrage étant perpendiculaire à un axe de rotation (40) du dispositif de rattrapage et une broche (23) servant à l'accouplement de l'arbre de serrage au dispositif de rattrapage, **caractérisé en ce que**
un axe longitudinal (38) de la broche forme avec l'axe de rotation de l'arbre de serrage un angle aigu (α) de 5° à 45° et
la broche (23) se déplace lors du serrage sur une trajectoire qui correspond à une enveloppe conique.

2. Frein à disque selon la revendication 1, **caractérisé en ce que** l'angle (α) vaut 10° à 30°, de préférence 15° à 23°.

3. Frein à disque selon la revendication 1 ou 2, **caractérisé en ce que** la broche (23) est montée sur l'arbre de serrage (14).

4. Frein à disque selon la revendication 3, **caractérisé en ce que** la broche (23) fait saillie dans la direction radiale au-delà de la périphérie extérieure de l'arbre de serrage (14).

5. Frein à disque selon l'une quelconque des revendications précédentes, **caractérisé en ce que** la broche (23) pénètre dans un évidement (42) au niveau du dispositif de rattrapage.

6. Frein à disque selon la revendication 5, **caractérisé en ce que** les dimensions de l'évidement (42) d'une part et les dimensions de la broche (23) d'autre part déterminent un jeu du frein.

7. Frein à disque selon la revendication 5 ou 6, **caractérisé en ce que** l'évidement (42) présente la forme d'une rainure axiale.

8. Frein à disque selon l'une quelconque des revendications 5 à 7, **caractérisé en ce qu'**une surface de limitation (44, 46) de l'évidement (42), au niveau de laquelle s'applique la broche (23) pour l'accouplement du dispositif de rattrapage à l'arbre de serrage (14), est plane, sphérique ou bombée.
